# EUROPÄISCHE PATENTSCHRIFT

(11) **EP 0 792 196 B1**
(45) Veröffentlichungstag und Bekanntmachung des Hinweises auf die Patenterteilung: **04.11.1998**
(21) Anmeldenummer: 95927647.8
(22) Anmeldetag: 08.08.1995
(51) Int. Cl.: B09C 1/10, B09C 1/00

(54) **VERFAHREN ZUM DEKONTAMINIEREN VON KONTAMINIERTEM GUT, SOWIE VORRICHTUNGEN DAFÜR**
METHOD OF DECONTAMINATING CONTAMINATED MATERIAL AND DEVICES THEREFOR
PROCEDE ET DISPOSITIFS DE DECONTAMINATION DE MATIERE CONTAMINEE

(30) Priorität: 09.08.1994 DE 4427964
(43) Veröffentlichungstag der Anmeldung: 03.09.1997
(73) Patentinhaber: Hege Terdesan GmbH & Co. KG., 74638 Waldenburg (DE)
(72) Erfinder: BÄRWINKEL, Axel, D-99734 Nordhausen (DE)
(74) Vertreter: Schuster, Gregor, Dipl.-Ing.
(86) Internationale Anmeldenummer: DE9501044
(87) Internationale Veröffentlichungsnummer: WO9605003

(56) Entgegenhaltungen:
- EP-A- 0 450 459
- EP-A- 0 566 256
- EP-A- 0 587 147
- WO-A-91/02565
- DE-A- 3 720 833
- DE-U- 9 407 972

## Beschreibung

### Stand der Technik

Die Erfindung geht aus von einem einer Vorrichtung zur Dekontaminierung und Aufarbeitung von kontaminiertem Gut nach der Gattung des Hauptanspruchs.

Gemäß eines bekannten Verfahrens (EP 0 486 578) zur Dekontaminierung und Aufarbeitung von kontaminiertem Gut wird das kontaminiertes Gut mit Belebtschlamm aus Kläranlagen versetzt, welche als Aktivbiomasse ein Abbauen der kontaminierenden Stoffe in diesem Gemisch aus kontaminiertem Gut und Belebtschlamm bewirken. Der Belebtschlamm dient hierbei nicht nur als Nährstoffquelle, sondern auch als Reservoir für jene, die Schadstoffe abbauenden Mikroorganismen. Vorteilhafterweise entsteht dadurch aus zwei "Reststoffen" ein neuer Wertstoff.

Bei den bekannten Anlagen und Verfahren über das Ansetzen des kontaminierten Gutes in Mieten muß mit einer Dekontaminierungsdauer, also Aktivarbeitsdauer der Mikroorganismen von etwa 300 Tagen gerechnet werden. Hierbei ist es erforderlich, diesen Boden einerseits zu belüften und andererseits in einer feuchten Konsistenz zu halten, die die erforderliche Feuchtigkeit aufweist, aber auch eine Teigigkeit, wie sie für eine Miete (ähnlich einem Komposthaufen) erforderlich ist. Üblicherweise werden zur Belüftung und auch zur Vermischung bzw. Befeuchtung diese Mieten öfters umgesetzt, was einerseits nicht einfach zu kontrollieren ist und andererseits mit einem nicht unerheblichen Aufwand verbunden ist.

Bei einem bekannten Verfahren und Anlage (DE-A-37.20.833) erfolgt die Rekultivierungsbehandlung von mit Xenobiotika kontaminiertem Erdreich durch Aufbringen von entsprechenden Mikroorganismen und gegebenenfalls Nährstoffen sowie durch Erzeugung günstiger Lebens- und Vermehrungsbedingungen für die Mikroorganismen. Hierbei wird das dekontaminierte Erdreich von der Kontaminierungsstelle abgehoben und in Form einer Lage oder Miete auf einer Bodenplatte ausgebreitet bzw. aufgeschichtet. Es folgt eine Beschickung mit Wasser und Nährstoffen in zeitlichen Abständen sowie ein Erwärmen und Durchsetzen des kontaminierten Erdreichs mit Luft. Das dabei durchsickernde Wasser wird kontinuierlich abgeführt, um die bei Mieten erforderliche Konsistenz sowie eine Aufrechterhaltung optimaler Lebens- und Vermehrungsbedingungen zu ermöglichen. Bei diesem Verfahren verteilt sich das Erdreich infolge mangelnder Raumbegrenzung unkontrolliert auf der Lage oder Miete, eine kontrollierte Homogenisierung, Befeuchtung und Vermischung des zu behandelnden Gutes ist kaum möglich bzw. nur mit einem nicht unerheblichen Aufwand verbunden.

In der Praxis hat sich herausgestellt, daß das kontaminierte Gut, insbesondere wenn es sich dabei um Böden handelt, sehr häufig Steine und andere Grobmaterialien enthalten, die eine Mietenbehandlung nahezu unmöglich macht.

Bei der Sanierung im Naßbettverfahren wurde auch schon vorgeschlagen, den Schlamm, also das Gemisch aus kontaminiertem Gut und Belebtschlamm in eine große Bearbeitungstrommel zu überführen, die unter ständigem langsamen Drehen einerseits für eine homogene Mischung dieses Schlamms sorgt und andererseits für die erforderliche Belüftung desselben. Im Verhältnis zu der so verarbeitbaren Schlammenge ist jedoch eine solche Trommel mit ihrem Antrieb, der Zu- und Abführung des Bodens, der erforderlichen Wasserzuführung udgl. außerordentlich aufwendig.

Eine bekannte gattungsgemäße Vorrichtung (EP-A-566.256) zur Behandlung von öligem Schlamm und organischen Abfällen stellt eine einen kreisförmigen Grundriß aufweisende Reaktionsvorrichtung mit einem zentral angeordnetem Pfosten dar, wobei der Pfosten einen Arm, an dem Mischvorrichtungen und Sprühköpfe angeordnet sind, trägt, der wiederum an der Innenseite des Reaktionsbehälters geführt bzw. gelagert ist. Solche an dem Arm angeordnete Mischvorrichtungen und Sprühköpfe haben den Nachteil, daß ein Austauschen der entsprechenden Mischvorrichtungen im Bedarfsfall, beispielsweise bei sich verändernder Konsistenz des Reaktionsgutes, nur erschwert bzw. nicht möglich ist.

Die erfindungsgemäße Vorrichtung mit den kennzeichnenden Merkmalen des Hauptanspruchs gewährleistet demgegenüber eine starke Verkürzung der erforderlichen Reaktionszeit für das Dekontaminieren zu je nach Kontaminierungsgrad zwischen 3 bis 6 Wochen. Außerdem ermöglicht diese Vorrichtung die Verwendung von Bearbeitungsvorrichtungen. wie sie zum Teil bekannt sind für den Einsatz auf anderen Gebieten und die vor allem durch ihre Einfachheit günstig herstellbar sind.

Durch die Verwendung eines Reaktionsbehälters kann die Belüftung und Entnahme des Schlamms in einfachster Weise erfolgen. Ein solcher Reaktionsbehälter dient für sich als Bioreaktor ohne selber dafür bewegt werden zu müssen. Statt dessen wird das in ihm befindliche Gut kontinuierlich behandelt. Aufgrund des Vorrichtungscharakters kann Flüssigkeit im Sumpf oder an der Oberfläche abgepumpt werden, oder es kann Flüssigkeit hinzugefügt werden, um die gewünschte Konsistenz zu erhalten. Das Gut in diesem Reaktionsbehälter ist aufgrund des statischen Zustandes jederzeit zugänglich, so daß völlig unproblematisch Gutproben entnommen werden können. Aufgrund einer Verkleinerung von groben Bestandteilen des kontaminierten Gutes kann ein recht homogenes Gemisch erzielt werden, was wiederum entscheidend für die gleichmäßige Dekontaminierung des kontaminierten Gutes einer in dem Reaktionsbehälter vorhandenen Behandlungscharge entscheidend sein kann.

Die erfindungsgemäße Vorrichtung weist an der Oberseite des Reaktionsbehälters eine horizontale Laufbahn auf, auf der ein Transportwerk geführt ist, welches schwenkbare Bearbeitungsvorrichtungen zur Bearbeitung des Reaktionsgutes trägt. Bei diesen Vorrichtungen kann es sich u. a. sowohl um ein Rührwerk, ein Pumpwerk als auch eine Belüftungsanlage handeln, als auch um eine Kombination aus zwei dieser Vorrichtungen oder allen dreien.

Die Schwenkbarkeit der Bearbeitungsvorrichtung ermöglicht hierbei zumindest eine Schwenkung aus der vertikalen Arbeitsstellung der Bearbeitungsvorrichtung in eine horizontale Ruhestellung der Bearbeitungsvorrichtung.

Die Bearbeitungsvorrichtungen können technisch miteinander derart verbunden sein, daß beispielsweise die Antriebswellen des Rührwerks gleichzeitig dem Pumpenantrieb dienen und daß beispielsweise die Belüftungsdüsen und Leitungen von diesen Konstruktionen gestützt werden.

Nach einer vorteilhaften Ausgestaltung der Erfindung ist eine schwenkbare Bearbeitungsvorrichtung ein Rührwerk (3) mit Propellern, Schrauben, Wendeln odgl.

Nach einer weiteren vorteilhaften Ausgestaltung der Erfindung ist eine schwenkbare Bearbeitungsvorrichtung ein Pumpwerk mit Saugstutzen auf der Unterseite nahe dem Boden des Behälters. Durch ein solches Pumpwerk kann beispielsweise nach Beendigung der Dekontaminierung das Gut aus dem Behälter entfernt werden.

Nach einer weiteren vorteilhaften Ausgestaltung der Erfindung ist eine schwenkbare Bearbeitungsvorrichtung eine Belüftungsanlage mit in das Gemisch ragenden und mit Belüftungsdüsen ausgestatteten Rohren.

Nach einer weiteren vorteilhaften Ausgestaltung der Erfindung weist das Transportwerk einen Rahmen auf. an dem Laufräder angeordnet sind und der eine quer zur Längsrichtung des Behälters verlaufende Schwenkachse trägt, an der die Vorrichtungen zur Bearbeitung des Reaktionsgutes getragen werden.

Nach einer weiteren vorteilhaften Ausgestaltung der Erfindung sind die Bearbeitungsvorrichtungen aus ihrer vertikalen Stellung in eine horizontale, vorzugsweise mit ihren oberen Abschnitten den oberen Behälterrand nicht überragende. Stellung schwenkbar.

Nach einer weiteren Ausgestaltung der Erfindung ist die Schwenkachse in Laufrichtung versetzt neben den Bearbeitungsvorrichtungen angeordnet. so daß beim Verschwenken jene unter die Achse, insbesondere in den Reaktionsbehälter hinein, verschwenkbar sind. Vorteilhafterweise wird hierdurch erzielt, daß in eingeschwenkter Stellung keine über den Reaktionsbehälter nach oben herausragende Teile vorhanden sind, was insbesondere für den Transport eines solchen Reaktionsbehälters entscheidend ist.

Nach einer vorteilhaften Ausgestaltung der Erfindung ist das dekontaminierte Gut mit Belebtschalmm dekontaminiert.

Nach einer vorteilhaften Ausgestaltung der Erfindung kann die erfindungsgemäße Vorrichtung auch bei Verfahren Anwendung finden, bei denen zwar ein Reaktionsbehälter zur Aufnahme des zu sanierenden Gutes vorhanden ist, bei dem jedoch dieses Gut durch Zusatz von Bakterien dekontaminiert wird, was eine bestimmte Behandlung dieses Gutes erfordert, beispielsweise in Form einer bestimmten Konsistenz in bezug auf Feuchtigkeit, Belüftung und vor allem Homogenität. Bei all diesen Verfahren spielt die begleitende Temperatur eine nicht unerhebliche Rolle, wobei beispielsweise in Randbereichen eines Reaktionsbehälters vorhandene Teile zur kalten Jahreszeit eine längere Reaktionszeit aufweisen, als solche Teile, die mehr im Zentrum des Reaktionsbehälters, also relativ weit entfernt von den kalten Randbereichen vorhanden sind.

Nach einer vorteilhaften Ausgestaltung der Erfindung ist das kontaminierte Gut kontaminierte Boden.

Nach einer weiteren vorteilhaften Ausgestaltung der Erfindung werden als kontaminiertes Gut Metall- oder Erdölsubstanzen enthaltende Industrieschlämme zugegeben. Dabei kann es sich beispielsweise um Schleifschlämme handeln.

Nach einer vorteilhaften Ausgestaltung der Erfindung werden dem dekontaminierten Gemisch struktur- und humusverbessernde Stoffe, wie Kompost (Grün-, Bio-, Klärschlammkompost), Rindenmulch, Kalk udgl. hinzugefügt.

Hierdurch wird beispielsweise eine besondere Bodenfruchtbarkeit erzielt, wobei solche Böden entweder ins ehemalige Areal zurückgeführt werden können, dem die kontaminierten Böden entnommen wurden. oder diese Böden können für besondere Einsätze, wie bei Dachbegrünungen, Lärmschutzwällen, Baumschulen, Landschaftspflegemaßnahmen udgl. verwendet werden.

Nach einer weiteren vorteilhaften Ausgestaltung der Erfindung findet die Durchführung des Verfahrens in einem geschlossenen Raum statt (einer Einhausung) und es wird die Abluft dieses Raumes separat behandelt, insbesondere gefiltert. Dadurch, daß der Reaktionsbehälter statisch ist, besteht die Möglichkeit, die Abluft in dieser Einhausung leicht zu sammeln, um sie dann entsprechend zu dekontaminieren. Zwar handelt es sich hier meist nur um geringe Giftanteile, die jedoch bei großen Anlagen zu entsprechenden Auflagen führen können.

Nach einer weiteren vorteilhaften Ausgestaltung der Erfindung dient zur Einhausung des oder der Container ein mit einer Plane überzogenes Gerüst. Natürlich können solche Container auch in einer Halle abgesetzt sein, die dann für mehrere solche Container als Einhausung dient und über eine zentrale Abluftentnahme verfügt.

Nach einer weiteren vorteilhaften Ausgestaltung der Erfindung ist das Reaktionsgut durch eine Heiz- und oder Kühlvorrichtung temperierbar. Hierbei kann es sich um eine Einrichtung handeln, die im Bereich der Wand des Reaktionsbehälters angeordnet ist oder im Misch- bzw. Pumpwerk untergebracht ist. Durch die Erwärmung des Reaktionsgutes kann, besonders in der kalten Jahreszeit die Reaktionszeit verkürzt werden. Andererseits besteht bei sehr hohen Außentemperaturen die Gefahr, daß die Temperatur im Reaktor zu stark ansteigt und es zu einer Überhitzung im Reaktor kommen kann. In diesem Fall ist eine Kühlung des Reaktors notwendig.

Nach einer weiteren vorteilhaften Ausgestaltung der Erfindung weist der Reaktorbehälter eine längliche Form auf und kann aus Metall bestehen.

Nach einer diesbezüglichen Ausgestaltung der Erfindung ist mindestens eine der Schmalseiten des Reaktionsbehälters als abmontierbare Wand ausgebildet. Auf diese Weise können mindestens zwei solche Container zusammengebaut werden, um ein entsprechend langen Behälter mit nur einer Rühranlage zu gewinnen. Vorteilhafterweise kann nach einer Ausgestaltung dieses Containers die Stirnwand angeflanscht sein, so daß die Flansche für die Verbindung eines Containers mit einem weiteren Container ermöglicht ist.

Nach einer weiteren vorteilhaften Ausgestaltung der Erfindung sind mehrere derartige Reaktionsbehälter im Einsatz, wobei das biologische Prozeßwasser eines derartigen Reaktors bei Bedarf für einen anderen verwendet wird bzw. dieses Prozeßwasser in den Kanal abgeleitet wird, weil es keine Kontaminierung aufweist.

Bei dem Reaktionsbehälter kann es sich erfindungsgemäß um einen Rundbehälter handeln, bei dem das Transportwerk ähnlich wie die Rührwerke von Kläranlagen um eine zentrale Achse rotiert und außenseitig auf einer horizontalen, kreisförmigen Laufbahn sich abstützt oder es kann sich um einen Längsbehälter handeln mit zwei parallelen Längsseiten und entsprechend zwei horizontalen Laufbahnen auf der oberen Stirnseite dieser Längsseiten. Das Transportwerk ist entsprechend gestaltet.

Weitere Vorteile und vorteilhafte Ausgestaltungen der Erfindung sind der nachfolgenden Beschreibung, der Zeichnung und den Ansprüchen entnehmbar.

Ein Ausführungsbeispiel einer erfindungsgemäßen Vorrichtung ist in der Zeichnung dargestellt und im folgenden näher beschrieben. Es zeigen:
- Fig. 1: ein Reaktionsbehälter als Container in der Seitenansicht,
- Fig. 2: eine Vorrichtung zur Bearbeitung des Reaktionsgutes für den Container nach Fig. 1 und
- Fig. 3: die Vorrichtung nach Fig. 2 in Schwenkstellung

### Beschreibung des Ausführungsbeispiels

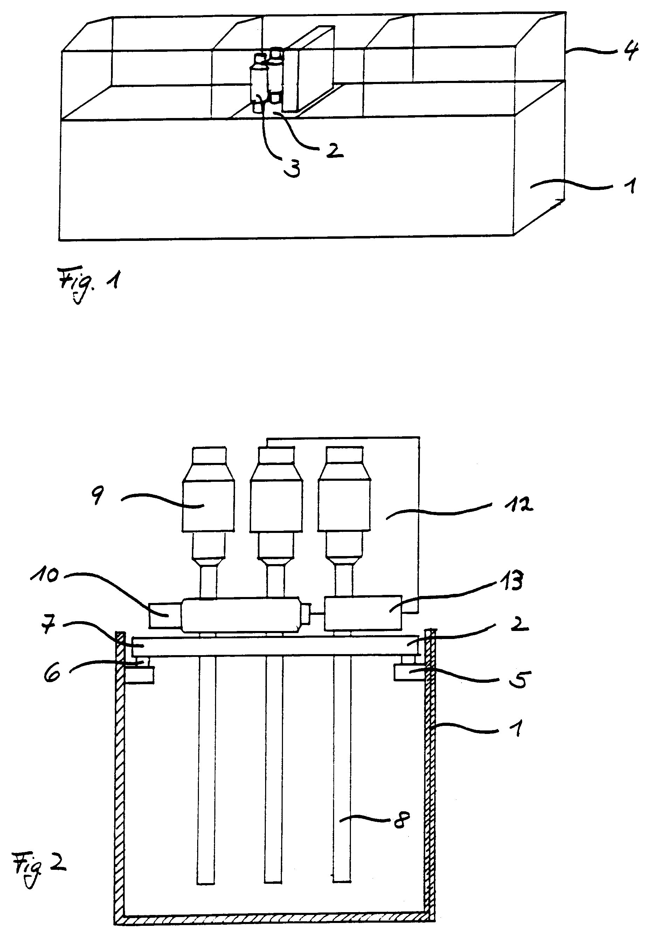

Fig. 1 zeigt einen Reaktionsbehälter 1 zur Durchführung des erfindungsgemäßen oder anderer Verfahren, die der Dekontaminierung von Böden dienen. Bei diesem Reaktionsbehälter handelt es sich um einen rechteckigen Längsbehälter aus Metall. an dem auf einem Transportwerk 2 ein Pumpwerk 3 und - in dieser Darstellung nicht erkennbar - eine Belüftungsanlage sowie ein Rührwerk angeordnet sind. Zur Einhausung des Reaktionsgutes ist der Reaktionsbehälter an seiner nach oben offenen Seite mit einem Gerüst 4 versehen, das mit einer Plane abgedeckt werden kann.

Fig. 2 zeigt einen Reaktionsbehälter 1 im Querschnitt mit einer Vorrichtungen zur Bearbeitung des Reaktionsgutes. Nahe dem oberen Rand des Reaktionsbehälters sind an den gegenüberliegenden Längsseiten des Behälters Laufschienen 5 angeordnet, auf denen das mit Laufrädern 6 versehene Transportwerk 2 geführt ist. Das Transportwerk 2 besteht aus einem Rahmen 7, an dem das Pumpwerk 3 angebracht ist. Die drei Saugstutzen 8, an deren oberem Ende die Pumpenmotoren 9 angeordnet sind, ragen senkrecht nach unten in den Reaktionsbehälter 1. Auf der Oberseite des Rahmens 7 sind außerdem der Antrieb 10 für das Transportwerk, der Motor 11 zum Verschwenken des Pumpwerks und ein Kasten 12 für die Elektro- und Steuereinrichtungen des Pumpwerks 3 und des Transportwerks 2 befestigt. In dieser Abbildung sind das Rührwerk und die Belüftungsanlage nicht dargestellt. Die Propeller oder Schrauben des Rührwerks und die Rohre mit Belüftungsdüsen der Belüftungsanlage ragen genau wie die Saugstutzen 8 senkrecht nach unten in den Reaktionsbehälter 1.

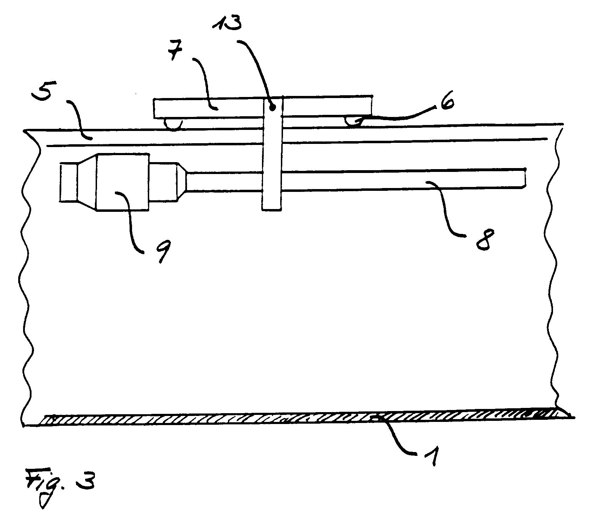

In Fig. 3 ist der Reaktionsbehälter 1 im Längsschnitt dargestellt. Das auf dem Transportwerk 2 angeordnete Pumpwerk 3 ist um die Schwenkachse 13 gegenüber der in Fig. 2 dargestellten vertikalen Position in eine horizontale Position geschwenkt. Die Schwenkachse 13 verläuft auf dem Rahmen 7 gegenüber dem Pumpwerk 3 leicht versetzt, so daß das Pumpwerk 3 in seiner horizontalen Stellung nicht mehr über den Rand des Reaktionsbehälters 1 nach oben hinausragt, was für den Transport des Reaktionsbehälters 1 wichtig ist.

### Bezugszahlen

- 1: Reaktionsbehälter
- 2: Transportwerk
- 3: Pumpwerk
- 4: Gerüst
- 5: Laufschienen
- 6: Laufräder
- 7: Rahmen
- 8: Saugstutzen
- 9: Pumpenmotor
- 10: Antrieb für das Transportwerk
- 11: Motor zum Verschwenken des Pumpwerks
- 12: Kasten
- 13: Schwenkachse

## Patentansprüche

1. Vorrichtung zur Dekontaminierung von kontaminiertem Gut
- mit einem einhausbaren Reaktionsbehälter (1),
- mit einer horizontalen Laufbahn (5),
- mit einem auf der Laufbahn (5) geführten Transportwerk (2) und
- mit auf dem Transportwerk angeordneter Bearbeitungsvorrichtung (8, 9) (Rührwerk, Pumpe, Belüftungsanlage odgl.), dessen Achse (Antriebswelle) weitgehend vertikal angeordnet ist,
dadurch gekennzeichnet,
- daß die Bearbeitungsvorrichtung (8, 9) auf dem Transportwerk schwenkbar angeordnet ist,
- daß die Schwenkachse der Bearbeitungsvorrichtung quer zur Längsrichtung des Behälters verläuft und
- daß die Schwenkbarkeit der Bearbeitungsvorrichtung zumindest eine Schwenkung aus der vertikalen Stellung in eine horizontale Stellung ermöglicht.

2. Vorrichtung nach Anspruch 1, dadurch gekennzeichnet, daß als schwenkbare Bearbeitungsvorrichtung auf dem Transportwerk (2) ein Rührwerk (3) mit Propellern, Schrauben, Wendein odgl. vorhanden ist und deren Verdrängungswirkung vertikal nach oben und/oder horizontal verläuft

3. Vorrichtung nach Anspruch 1, dadurch gekennzeichnet, daß als schwenkbare Bearbeitungsvorrichtung auf dem Transportwerk (2) eine Belüftungsanlage vorhanden ist mit in das Reaktionsgut bzw. in das Gemisch ragenden und mit Belüftungsdüsen ausgestatteten Rohren.

4. Vorrichtung nach Anspruch 1, dadurch gekennzeichnet,
daß als schwenkbare Bearbeitungsvorrichtung auf dem Transportwerk (2) ein Pumpwerk (3) vorhanden ist mit Saugstutzen (8) auf der Unterseite nahe dem Boden des Reaktionsbehälters (1).

5. Vorrichtung nach einem der vorhergehenden Ansprüche, dadurch gekennzeichnet,
daß das Transportwerk (2) einen Rahmen (7) aufweist, an dem Laufräder (6) und die Schenkachse angeordnet sind.

6. Vorrichtung nach einem der vorhergehenden Ansprüche, dadurch gekennzeichnet, daß bei Ausschwenkung der Bearbeitungsvorrichtung vorzugsweise diese mit ihrem oberen Abschnitt den oberen Behälterrand nicht überragt.

7. Vorrichtung nach einem der vorhergehenden Ansprüche, dadurch gekennzeichnet, daß die Schwenkachse (13) in Laufrichtung versetzt neben den Bearbeitungsvorrichtungen angeordnet ist, so daß beim Verschwenken jene unter die Achse, insbesondere in den Reaktionsbehälter hinein, verschwenkbar sind.

8. Vorrichtung nach einem der vorhergehenden Ansprüche, dadurch gekennzeichnet,
daß das zu dekontaminierende Gut mit Belebtschlamm dekontaminiert ist.

9. Vorrichtung nach einem der vorhergehenden Ansprüche, dadurch gekennzeichnet,
daß das zu dekontaminierende Gut mit Bakterien dekontaminiert ist.

10. Vorrichtung nach einem der vorhergehenden Ansprüche, dadurch gekennzeichnet,
daß das kontaminierte Gut kontaminierte Böden sind.

11. Vorrichtung nach einem der vorhergehenden Ansprüche, dadurch gekennzeichnet,
daß das kontaminierte Gut Metall- oder Erdölsubstanzen enthaltende Industrieschlämme sind.

12. Vorrichtung nach einem der vorhergehenden Ansprüche, dadurch gekennzeichnet,
daß dem dekontaminierten Gemisch struktur- und humusverbessernde Stoffe, wie Kompost (Grün-, Bio-, Klärschlammkompost), Rindenmulch, Kalk oder dgl. hinzugefügt werden.

13. Vorrichtung nach einem der vorhergehenden Ansprüche, dadurch gekennzeichnet,
daß die Bearbeitung des zu dekontaminierenden Gutes im geschlossenen Raum stattfindet (Einhausung) und die Abluft dieses Raumes separat behandelt, insbesondere gefiltert wird.

14. Vorrichtung nach einem der vorhergehenden Ansprüche, dadurch gekennzeichnet,
daß zur Einhausung des oder der Reaktionsbehälter (1) ein mit einer Plane überzogenes Gerüst (4) dient.

15. Vorrichtung nach einem der vorhergehenden Ansprüche, dadurch gekennzeichnet,
daß das Reaktionsgut durch eine Hitze- und/oder Kühleinrichtung temperierbar ist.

16. Vorrichtung nach einem der vorhergehenden Ansprüche, dadurch gekennzeichnet,
daß der Reaktionsbehälter (1) länglich und vorzugsweise als Metallcontainer ausgebildet ist und an den Schmalseiten keine Laufbahn aufweist.

17. Vorrichtung nach Anspruch 16, dadurch gekennzeichnet,
daß mindestens eine der Schmalseiten des Reaktionsbehälters als eine abmontierbare Wand ausgebildet ist.

18. Vorrichtung nach einem der vorhergehenden Ansprüche, dadurch gekennzeichnet,
daß mehrere Reaktionsbehälter im Einsatz sind und daß das biologische Prozeßwasser eines Reaktionsbehälters bei Bedarf für die anderen Chargen anderer Reaktionsbehälter verwendet wird.

19. Vorrichtung nach einem der vorhergehenden Ansprüche, dadurch gekennzeichnet,
daß der Reaktionsbehälter als Rundbehälter ausgebildet ist.

## Claims

1. Device for the decontamination of contaminated materials
- with a reaction container (1) disposable within a housing,
- with a horizontal runner track (5),
- with a transport mechanism (2) guided on the runner track (5) and
- with a processing device (8, 9) (mixer, pump, ventilation mechanism or the like) disposed on the transport mechanism the axle of which (drive shaft) is substantially vertical,
characterized in that,
- the processing device (8,9) is disposed on the transport mechanism in a pivotable manner,
- that the pivot axis of the processing device extends transverse to the longitudinal direction of the container and
- the pivotability of the processing device facilitates at least a pivoting out of the vertical position into a horizontal position.

2. Device according to claim 1, characterized in that the pivotable processing device on the transport mechanism (2) is a mixing mechanism (3) having propellers, screws, spirals or the like whose displacement effect extends vertically in the upper direction and / or horizontally.

3. Device according to claim 1, characterized in that the pivotable processing device on the transport mechanism (2) is a ventilation mechanism having tubes penetrating into the reaction product or into the mixture with ventilation nozzles.

4. Device according to claim 1, characterized in that the pivotable processing device on the transport mechanism (2) is a pump mechanism (3) having suction intakes (8) on the lower side proximate the floor of the reaction container (1).

5. Device according to any one of the preceding claims, characterized in that the transport mechanism (2) comprises a frame (7) having runner wheels (6) and the pivot axle disposed thereon.

6. Device according to any one of the preceding claims, characterized in that, when pivoting out the processing device, the upper section of same preferentially does not protrude beyond the upper edge of the container.

7. Device according to any one of the preceding claims, characterized in that the pivot axle (13) is displaced in the running direction next to the processing device so that during pivoting same can be pivoted below the axle, in particular into the reaction container.

8. Device according to any one of the preceding claims, characterized in that the material to be decontaminated is decontaminated using activated sludge.

9. Device according to any one of the preceding claims, characterized in that the material to be decontaminated is decontaminated using bacteria.

10. Device according to any one of the preceding claims, characterized in that the contaminated material is contaminated earth.

11. Device according to any one of the preceding claims, characterized in that the contaminated material is industrial sludge containing metal or oil substances.

12. Device according to any one of the preceding claims, characterized in that structure and humus improving materials such as compost (plant, biological, sewage sludge compost), bark shavings, lime or the like are added to the decontaminated mixture.

13. Device according to any one of the preceding claims, characterized in that processing of the material to be decontaminated occurs in a closed volume (housing) with the exhaust of this volume being separately treated, in particular filtered.

14. Device according to any one of the preceding claims, characterized in that a frame work (4) having a tarpaulin cover serves for encasing the reaction container or containers (1).

15. Device according to any one of the preceding claims, characterized in that the reaction product can be temperature controlled using heating and/or cooling devices.

16. Device according to any one of the preceding claims, characterized in that the reaction container (1) is elongated in shape and is preferentially a metallic container and does not have a runner track on its narrow sides.

17. Device according to claim 16, characterized in that at least one of the narrow sides of the reaction container is configured as a removable wall.

18. Device according to any one of the preceding claims, characterized in that a plurality of reaction containers are utilized and the biological processing water of a reaction container is, when necessary, utilized for the charges of other reaction containers.

19. Device according to any one of the preceding claims, characterized in that the reaction container is a round container.

## Revendications

1. Dispositif de décontamination de matière contaminée,
- avec un récipient de réaction (1) pouvant être transformé en un espace clos,
- avec une voie de roulement horizontale (5),
- avec un mécanisme de transport (2) guidé dans la voie de roulement (5), et
- avec un dispositif de traitement (8, 9) (agitateur, pompe, dispositif d'aération ou autres) disposé sur le mécanisme de transport, dont l'axe (l'arbre moteur) est orienté à peu près verticalement,
caractérisé par le fait
- que le dispositif de traitement (8, 9) agencé sur le mécanisme de transport est pivotable,
- que le pivot du dispositif de traitement a une orientation transversale par rapport à la direction longitudinale du récipient et
- que la faculté de pivotement du dispositif de traitement permet au moins un pivotement de la position verticale en une position horizontale.

2. Dispositif selon la revendication 1,
caractérisé par le fait
que comme dispositif de traitement pivotant sur le mécanisme de transport (2), il y a un agitateur (3) avec des hélices, des éléments hélicoïdaux ou autres, dont l'action de refoulement est exercée verticalement vers le haut et/ou horizontalement.

3. Dispositif selon la revendication 1,
caractérisé par le fait
que comme dispositif de traitement pivotant sur le mécanisme de transport (2), il y a un dispositif d'aération avec des tubes pénétrant dans la matière ou le mélange devant réagir et équipés de buses d'aération.

4. Dispositif selon la revendication 1,
caractérisé par le fait
que comme dispositif de traitement pivotant sur le mécanisme de transport (2), il y a un mécanisme de pompage (3) avec des buses d'aspiration (8) sur le côté inférieur, à proximité du fond du récipient de réaction (1).

5. Dispositif selon l'une des revendications précédentes,
caractérisé par le fait
que le mécanisme de transport (2) présente un châssis (7), sur lequel sont agencés des galets de roulement (6) et le pivot.

6. Dispositif selon l'une des revendications précédentes,
caractérisé par le fait
que lors du pivotement du dispositif de traitement, de préférence ce dernier ne dépasse pas avec sa partie supérieure le bord supérieur du récipient.

7. Dispositif selon l'une des revendications précédentes,
caractérisé par le fait
que le pivot (13) est disposé, décalé en direction de la course, à côté des dispositifs de traitement, afin que ces derniers puissent pivoter sous l'axe, notamment dans le récipient de réaction.

8. Dispositif selon l'une des revendications précédentes,
caractérisé par le fait
que la matière à décontaminer est décontaminée avec de la boue activée.

9. Dispositif selon l'une des revendications précédentes,
caractérisé par le fait
que la matière à décontaminer est décontaminée avec des bactéries.

10. Dispositif selon l'une des revendications précédentes,
caractérisé par le fait
que la matière contaminée est de la terre contaminée.

11. Dispositif selon l'une des revendications précédentes,
caractérisé par le fait
que la matière contaminée se compose de boues industrielles contenant des substances métalliques ou pétrolières.

12. Dispositif selon l'une des revendications précédentes,
caractérisé par le fait
que des matières servant à améliorer la structure et l'humus, par ex. du compost (compost végétal ou biologique ou boues de curage), du mulch d'écorces, de la chaux, etc., sont rajoutées au mélange décontaminé.

13. Dispositif selon l'une des revendications précédentes,
caractérisé par le fait
que le traitement de la matière à décontaminer a lieu dans un espace clos (transformation en espace clos) et que l'air d'échappement de cet espace est traité et notamment filtré séparément.

14. Dispositif selon l'une des revendications précédentes,
caractérisé par le fait
qu'une charpente (4) recouverte avec une bâche sert à transformer en espace clos le ou les récipients de réaction (1).

15. Dispositif selon l'une des revendications précédentes,
caractérisé par le fait
que la matière soumise à la réaction peut être mise à une température égale par un dispositif de réchauffement ou de refroidissement.

16. Dispositif selon l'une des revendications précédentes,
caractérisé par le fait
que le récipient de réaction (1) a une forme allongée, qu'il est de préférence un conteneur métallique, et qu'il n'a pas de voie de roulement sur les petits côtés.

17. Dispositif selon la revendication 16,
caractérisé par le fait
qu'au moins un des petits côtés du récipient de réaction est une paroi démontable.

18. Dispositif selon l'une des revendications précédentes,
caractérisé par le fait
que plusieurs récipients de réaction sont en service et qu'en cas de besoin, l'eau du traitement biologique d'un récipient de réaction est utilisée pour les lots des autres récipients de réaction.

19. Dispositif selon l'une des revendications précédentes,
caractérisé par le fait
que le récipient de réaction a la forme d'un récipient circulaire.
